# EUROPEAN PATENT SPECIFICATION

(11) **EP 1 204 318 B1**
(45) Date of publication and mention of the grant of the patent: **13.10.2004**
(21) Application number: 00957522.6
(22) Date of filing: 17.08.2000
(51) Int. Cl.: A01N 25/30, A01N 57/20

(54) **PHOSPHATE ESTER-BASED SURFACTANT ADJUVANTS AND COMPOSITIONS THEREOF**
OBERFLÄCHENAKTIVE HILFSSTOFFE AUF PHOSPHATESTER-BASIS UND ZUSAMMENSETZUNGEN DAVON
ADJUVANTS TENSIOACTIFS A BASE D'ESTER DE PHOSPHATE ET LEURS COMPOSITIONS

(30) Priority: 18.08.1999 US 149542 P; 18.08.1999 US 149553 P
(43) Date of publication of application: 15.05.2002
(73) Proprietor: HUNTSMAN PETROCHEMICAL CORPORATION, Austin, Texas 78752 (US)
(72) Inventor: LEWIS, David, Charles, Austin, TX 78729-7499 (US); STRIDDE, Howard, Meyer, Georgetown, TX 78628-8364 (US)
(74) Representative: Winkler, Andreas, Dr.
(86) International application number: PCT/US2000/022593
(87) International publication number: WO 2001/011958

(56) References cited:
- US-A- 5 180 414
- US-A- 5 869 423
- US-A- 5 877 112

## Description

### Technical Field

This invention relates to surfactants, and, more particularly, to surfactants that enhance the bioefficacy of herbicides, as well as to surfactant compositions, herbicide composition, and a method of killing or controlling weeds or unwanted vegetation.

### Background of the Invention

Herbicide compositions are often characterized according to the identity of the active ingredient, and by the mode by which the active ingredient causes vegetation necrosis. Regardless of the active ingredient, most herbicides cause vegetation necrosis by interfering with one or more vital biological processes essential to the vegetation's survival. Yet, before the active ingredient of a herbicide can interfere with such biological processes, the active ingredient must somehow be absorbed into the vegetation. Unfortunately, this absorption is often hindered by the chemical nature of the active ingredient.

Accordingly, in addition to active ingredients, most herbicide compositions also comprise other components, commonly termed adjuvants, that enhance the performance and absorption of the active ingredient. One class of adjuvants that is frequently used is surfactants. Surfactants are useful in herbicide compositions because they tend to both enhance the absorbing properties of the active ingredient, as well as facilitate application of the herbicide.

Several existing patents disclose various classes of surfactant adjuvants. One common class of surfactants includes derivatives of alkoxylated amines. For example, U.S. Pat. No. 5,683,958 discloses surfactants comprising tallow amine ethoxylates blended with a phosphate ester of an alkylphenol or alcohol ethoxylate; U.S. Pat. No. 5,798,310 discloses adjuvants comprising alkoxylated quaternary ammonium surfactants; U.S. Pat. No. 5,668,085 discloses glyphosate formulations comprising alkoxylated amine surfactants; and U.S. Pat. No. 5,118,444 discloses amine-oxide surfactants produced by oxidizing tertiary polyalkoxylated amine surfactants.

US 5,869,423 discloses an oil-in-water emulsion containing at least one active substance from the group consisting of phosphates, thiophosphates and/or carbonates and a surfactant compound from the group consisting of ethoxylated fatty amines or of phosphorylated fatty amine ethoxylates.

However, the prior art appears to lack any reference to the use of phosphate esters or alkoxylated phosphate esters of tallow amine ethoxylates as suitable herbicide adjuvants. Surprisingly, it was discovered that phosphate esters and alkoxylated phosphate esters of tallow amine ethoxylates function to improve the bioefficacy of herbicide compositions containing such surfactants. Also, herbicide formulations comprising such phosphate esters or alkoxylated phosphate esters are expected to have a reduced tendency to cause eye and skin irritation.

Accordingly, the present invention is directed toward surfactant adjuvants comprising phosphate esters and alkoxylated phosphate esters of tallow amine ethoxylates, herbicide compositions comprising such surfactant adjuvants, and a method of controlling unwanted vegetation using such herbicide compositions.

### Summary of the Invention

The present invention provides a herbicide composition according to claim 1, a surfactant for increasing the bioefficiacy of a herbicide according to claim 17, a surfactant composition for increasing the bioefficiacy of a herbicide according to claim 21, as well as a method of killing or controlling weeds or unwanted vegetation according to claim 31.

Further embodiments of the subject-matter of the present invention are disclosed in respective subclaims.

The present invention provides for surfactants that further improve the bioefficacy of herbicides. The surfactants comprise (i) phosphate monoesters of tallow amine ethoxylates, alone or in combination with phosphate diesters of tallow amine ethoxylates, or (ii) alkoxylated phosphate monoesters of tallow amine ethoxylates, alone or in combination with alkoxylated phosphate diesters of tallow amine ethoxylates. The monoesters (I) and the diesters (II) have the following general structure: 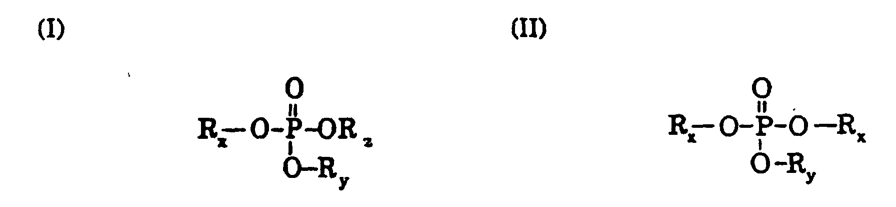 where R_{y} and R_{z} are each independently hydrogen or R₆-OH, where R₆ is a linear or branched chain alkenyl with from about two to about six carbon atoms; and, Rₓ has the following general structure: 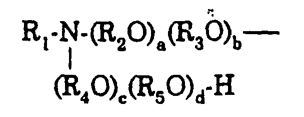 where R₁ is a straight or branched chain alkyl or alkenyl group with from about six to about twenty carbon atoms; R₂, R₃, R₄, and R₅ are each independently straight or branched chain alkenyl groups with from about two to about six carbon atoms; a,b,c, and d each independently vary from zero to about twenty; and a+b+c+d varies from about five to about eighty.

The present invention also provides for herbicide compositions that contain a surfactant of the present invention. The herbicide compositions comprise a herbicidal active ingredient comprising glyphosate or a salt thereof, a surfactant of the present invention, and optionally, one or more formulation aids. The herbicide compositions of the present invention are expected to have a reduced tendency to cause eye and skin irritation.

The present invention additionally provides for a method of controlling unwanted weeds or vegetation using the herbicide compositions of the present invention.

### Detailed Description of the Preferred Embodiment

The surfactants of the present invention may be used in conjunction with any number of herbicidal active ingredients comprising glyphosate or a salt thereof. Glyphosate is probably the most widely used herbicide.

Glyphosate, or N-phosphonomethylglycine, is a broad-spectrum herbicide that is useful on essentially all annual and perennial plants, including, grasses, broad-leaved weeds, and woody plants. Glyphosate promotes plant necrosis by inhibiting aromatic amino acid biosynthesis. By inhibiting aromatic amino acid synthesis, and thereby protein synthesis, glyphosate initially suppresses plant growth, which is soon followed by plant necrosis.

In its free acid form, glyphosate has a low water solubility. As such, water-based glyphosate compositions typically contain a water soluble salt of glyphosate, such as the isopropylamine salt. For example, many commercially available herbicides contain the water soluble mono-isopropylamine salt of glyphosate.

The surfactants of the present invention may be prepared by reacting either phosphorous pentoxide or polyphosphoric acid with one or more tallow amine ethoxylates. The tallow amine ethoxylate may comprise any number of commercially available tallow amine ethoxylates. Preferably, the tallow amine ethoxylates comprises SURFONIC® T5, SURFONIC® T15, SURFONIC® T20, or mixtures thereof (all commercially available from the Huntsman Corporation, Houston, Texas).

A typical preparation involves first heating one or more tallow amine ethoxylates to a temperature from about 50°C to about 85°C in a reaction vessel, and then gradually adding either phosphorous pentoxide or polyphosphoric acid. After all the phosphorous pentoxide or polyphosphoric acid has been added to the reaction vessel, the reaction components are then heated at a temperature from about 50°C to about 130°C, under nitrogen, for at least 3 hours.

The resulting phosphate esters comprise monoesters (I), diesters (II), or mixtures thereof, with the following general structure: 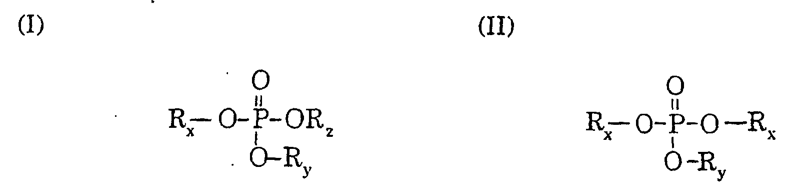 where R_{y} and R_{z} are hydrogen; and, Rₓ has the following general structure: 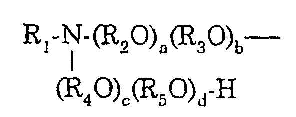 where R₁ is a straight or branched chain alkyl or alkenyl group with from about six to about twenty carbon atoms; R₂, R₃, R₄, and R₅ are each independently straight or branched chain alkenyl groups with from about two to about six carbon atoms; a,b,c, and d each independently vary from about zero to about twenty; and a+b+c+d varies from about five to about eighty. In highly preferred embodiments, R₁ is a straight or branched chain alkyl or alkenyl group with from about sixteen to about eighteen carbon atoms; R₂, R₃, R₄, and R₅ are each independently alkenyl groups with from about two to about three carbon atoms; a+b varies from about fifteen to twenty; and c+d varies from about fifteen to twenty.

The resulting phosphate ester surfactants may then be blended with one or more formulation aids before being combined with a herbicide. Such formulation aids may include alkoxylated amine surfactants, low molecular weight glycols, water, anti-freeze agents, dyes, thickening agents, anti-foaming agents, UV stabilizers, or mixtures thereof.

As a formulation aid, the alkoxylated amine surfactants function to consume any residual acidity from the phosphate ester preparation, and to raise the cloudpoint in the final herbicide formulation. Preferably, the alkoxylated amine surfactant formulation aids comprise lower tallow amine ethoxylates, meaning tallow amine ethoxylates with an ethylene oxide content equal to, or lower than, the ethylene oxide content of the phosphate esters of the present invention. Such alkoxylated amine surfactants may include, but are not limited to, SURFONIC® T5 or SURFONIC® T15.

As formulation aids, water and low molecular weight glycols help prevent gelling of the surfactants in the final herbicide formulation. The low molecular weight glycol formulation aids may comprise any lower molecular weight glycol, including, but not limited to, propylene glycol, ethylene glycol, or diethylene glycol.

The relative amount of formulation aids that should be blended with the phosphate ester surfactants of the present invention will depend on a variety of factors, including the degree of residual acidity from the phosphate ester preparation, the nature of the herbicide to be blended with the surfactant solution, the proposed mode of application of the final herbicide formulation, etc. If the phosphate ester surfactants of the present invention are.to be incorporated into water-based glyphosate solutions, preferably, from about 26% to about 59% by mass of the blended surfactant solution should comprise the phosphate ester surfactants of the present invention, from about 21% to about 54% by mass of the blended surfactant solution should comprise an alkoxylated amine surfactant, from about 5% to about 10% by mass of the blended surfactant solution should comprise a low molecular weight glycol, and from about 10% to about 15% by mass the blended surfactant solution should comprise water.

Alternatively, instead of being blended with formulation aids, the phosphate ester surfactants of the present invention may be alkoxylated by reacting the phosphate esters with a lower molecular weight alkylene oxide, including, but not limited, to ethylene oxide, propylene oxide, and/or butylene oxide. A typical preparation involves first heating the phosphate ester in a reactor at a temperature from about 30°C to about 80°C. Once the phosphate ester has been heated, one or more lower molecular weight alkylene oxides may be reacted with the phosphate ester until all the acidity is quenched (*i*.*e*. the pH is approximately 7.0), and a pressure rise is observed. The reactor may then be purged with nitrogen to eliminate any excess alkylene oxide.

The resulting alkoxylated phosphate esters comprise alkoxylated monoesters (I), diesters (II), or mixtures thereof, with the following general structure: 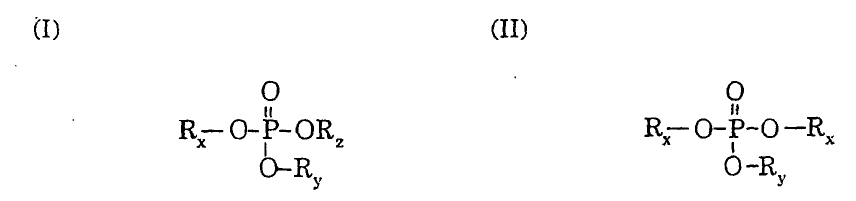 where R_{y} and R_{z} are R₆-OH, where R₆ is a linear or branched chain alkenyl with from two to six carbon atoms; and, Rₓ has the following general structure: 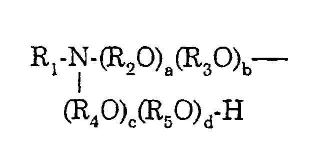 where R₁ is a straight or branched chain alkyl or alkenyl group with from about six to about twenty carbon atoms; R₂, R₃, R₄, and R₅ are each independently straight or branched chain alkenyl groups with from about two to about six carbon atoms; a,b,c, and d each independently vary from zero to about twenty; and, a+b+c+d varies from about five to about eighty. In highly preferred embodiments, R₁ is a straight or branched chain alkyl or alkenyl group with from about sixteen to about eighteen carbon atoms; R₂, R₃, R₄, and R₅ are each independently alkenyl groups with from about two to about three carbon atoms; a+b varies from about fifteen to about twenty; and c+d varies from about fifteen to about twenty.

One, or more than one, of the resulting alkoxylated phosphate ester surfactants may then be blended with water or other formulation aids before being combined with a herbicide. Such other formulation aids may include, but are not limited to, glycols, anti-freeze agents, dyes, thickening agents, anti-foaming agents, UV stabilizers, pH adjusting agents, or mixtures thereof. Preferably, the glycol may include, but is not limited to, polyethylene glycols, polypropylene glycols, or glycol ethers.

The relative amount of water or other formulation aids that should be blended with the alkoxylated phosphate ester surfactants of the present invention will depend on a variety of factors, including the nature of the herbicide to be blended with the surfactant solution, the proposed mode of application of the final herbicide formulation, the nature of the vegetation to be treated, etc. Preferably, less than about 90% by mass of the blended surfactant solution should comprise the alkoxylated phosphate ester surfactants of the present invention, and at least about 10% by mass of the blended surfactant solution should comprise water.

The surfactants of the present invention may then be blended with a herbicide. The relative amount of the surfactants of the present invention that should be blended with a herbicide will vary depending on a variety of factors, including the nature of the herbicide, the nature of the vegetation to be treated, the method of application, whether the herbicide is a water-based or a granular formulation, etc. In any case, the resulting herbicide compositions of the present invention should include a herbicidally effective amount of a herbicidal active ingredient comprising glyphosate or a salt thereof, and a sufficient amount of a surfactant of the present invention to enhance the effectiveness of the herbicidal active ingredient. The term "herbicidally effective amount" means the amount of herbicide necessary to promote plant necrosis.

The surfactants of the present invention may be blended with any number of commercially available herbicides, including, but not limited to glyphosate or a salt thereof. Preferably, in water-based glyphosate solutions, less than about 30% by volume of the herbicide composition should comprise the surfactant compositions of the present invention. The term "surfactant composition" means the surfactants of the present invention that have been blended with formulation aids.

The herbicide compositions of the present invention may be prepared as either liquid or solid compositions. Liquid compositions may include solutions ready for immediate application, aqueous concentrates intended to be diluted with water before application, or microencapsulated actives suspended in liquid media. Solid compositions may include, but are not limited to, water dispersible granules, water soluble granules, microencapsulated actives, free-flowing particulate compositions, or granular-based solids that have been compressed into tablets or briquets of any desired size and shape. Optionally, solid compositions may include formulations where the herbicide composition is absorbed onto water soluble or water insoluble inert dry carriers, including, but not limited to, Magnesol® (commercially available from the Dallas Group of America, Inc., Whitehouse, New Jersey).

Accordingly, the herbicide compositions of the present invention may be applied to vegetation as either a liquid or solid composition. Liquid herbicide compositions are typically sprayed on the vegetation to be treated, and typically comprise either liquid concentrates or dissolved or dispersed solid compositions. Liquid compositions may also be injected into, or painted on the truck portion of the vegetation to be treated. Solid granular compositions may be spread on or around the vegetation to be treated.

Herbicide formulations comprising the surfactant compositions of the present invention are expected to have a reduced tendency to cause eye and skin irritation. Reduced eye and skin irritation is expected because the pH of the surfactant compositions of the present invention is about 7.0. Because herbicides are often applied by humans, or in the vicinity of humans or animals, reduced eye irritation is a desirable feature in such compositions.

It is understood that variations may be made in the foregoing without departing from the scope of the invention. For example, although the surfactants of the present invention are primarily discussed as being incorporated into water-based herbicide compositions, it is understood that the surfactants of the present invention may also be incorporated into dry granular herbicide formulations. In addition, although the surfactants of the present invention are primarily discussed as being incorporated into glyphosate solutions, the surfactants of the present invention may be incorporated into any number of other herbicide formulations, including, but not limited to, macro and micro emulsions, suspension, suspension concentrates, and other liquid and solid formulations known to those skilled in the art, to increase the bioefficacy of such herbicides.

The following examples are illustrative of the present invention, and are not intended to limit the scope of the invention in any way.

### Preparation of the Phosphate Esters

### Example 1a

769.5 grams of SURFONIC® T-5 were added to a reaction vessel, and heated to a temperature of 55°C, under nitrogen. Once the temperature reached 55°C, 130.5 grams of phosphorous pentaoxide were gradually added to the reaction vessel. After all the phosphorous pentaoxide had been added to the reaction vessel, the mixture was heated at a temperature of 85°C, under nitrogen, for 3 hours.

The resulting phosphate ester was analyzed by ³¹P NMR. The results showed a relative mole ratio of 93.8% for the monoester, and a relative mole ratio of 6% for the diester.

### Example 1b

837.0 grams of SURFONIC® T-15 were added to a reaction vessel, and the reaction vessel was heated to a temperature of 55°C, under nitrogen. Once the temperature reached 55°C, 63.0 grams of phosphorous pentaoxide were added to the reaction vessel. After all the phosphorous pentaoxide had been added to the reaction vessel, the mixture was heated at a temperature of 83°C, under nitrogen, for 3 hours.

### Example 1c

868.5 grams of SURFONIC® T-15 were added to a reaction vessel, and the reaction vessel was heated to a temperature of 55°C, under nitrogen. Once the temperature reached 55°C, 31.5 grams of phosphorous pentaoxide were gradually added to the reaction vessel. After all the phosphorous pentaoxide was added to the reaction vessel, heating was continued, under nitrogen, for 3 hours. Heating was then discontinued, and the mixture was allowed to stand for approximately 12 hours. Then, the reaction mixture was heated to a temperature of 80°C, under nitrogen, for 2 hours.

### Preparation of Phosphate Ester Surfactant Solutions

### Example 2

The phosphate esters produced in Examples 1a -1c were blended with formulation aids, in the following amounts (in grams):

| | Surfactant Solution | | |
|---|---|---|---|
| **Component** | **A** | **B** | **C** |
| phosphate ester from Example 1a | 211.36 | | |
| phosphate ester from Example 1b | | 352.00 | |
| phosphate ester from Example 1c | | | 472.00 |
| SURFONIC® T5 | | 32.00 | 168.00 |
| SURFONIC® T15 | 428.64 | 256.00 | |
| deionized water | 80.00 | 80.00 | 80.00 |
| diethylene glycol | 80.00 | 80.00 | 80.00 |

### Preparation of Glyphosate Solutions Containing the Phosphate Ester Surfactants of the Present Invention

### Example 3

For each surfactant solution prepared in Example 2, a glyphosate solution was prepared that contained about 7.5, 15, and 30% vol. of the blended surfactant solution. Rodeo® was used as the source of glyphosate. (Rodeo® contains 648 g/L of the mono-isopropylamine salt of glyphosate.)

### Bioefficacy Testing of Glyphosate Solutions Containing the Phosphate Ester Surfactants of the Present Invention

### Example 4

An outside laboratory tested the bioefficacy of the glyphosate solutions prepared in Example 3 on morning glory and velvet leaf weeds. For comparison, the laboratory also tested the bioefficacy of a glyphosate solution that did not contain a surfactant, namely Rodeo®.

The bioefficacy testing was conducted in a greenhouse, using one foot by one foot plots, and a randomized complete block study design. The subject weeds were sprayed with each of the glyphosate solutions prepared in Example 3, under the following conditions:

| | |
|---|---|
| Application Pressure | 40 psi |
| Nozzle Type | Flat-fan |
| Nozzle Size | 8002E |
| Boom Height, Unit | 18 inches |
| Ground Speed, Unit | 4 mph |
| Carrier | water |
| Spray Volume | 10 gpa |
| Propellant | CO₂ |
| Rate/Unit | 20 fluid ounce/acre |

The percent control or percent of plant injury was determined seven and fourteen days after treatment with the glyphosate solutions. For each glyphosate solution, four plots of weeds were tested. The results are expressed in terms of a mean for the four plots.

The results of the bioefficacy testing, completed on velvet leaf weeds, seven and fourteen days after treatment, are summarized in Table 1. The results are expressed in terms of percent control, where 0% represents no plant injury, and 100% represents complete plant injury. Seven and fourteen days after treatment with only glyphosate (*i.e.* Rodeo®), the percent control was 33% and 43%, respectively.

**Table 1**

| **Percent Control** | | | | |
|---|---|---|---|---|
| % surfactant solution | # **days** | **A** | **B** | **C** |
| **7.5%** | **7** | 28 | 49 | 58 |
| | **14** | 46 | 73 | 75 |
| **15%** | **7** | 48 | 50 | 60 |
| | **14** | 66 | 74 | 79 |
| **30%** | **7** | 69 | 79 | 69 |
| | **14** | 89 | .92 | 89 |

The results of the bioefficacy testing completed on morning glory weeds, seven and fourteen days after treatment, are summarized in Table 2. The results are expressed in terms of percent control, where 0% represents no plant injury, and 100% represents complete plant injury. Seven and fourteen days after treatment with only glyphosate (*i.e.* Rodeo®), the percent control was 23% and 24%, respectively.

**Table 2**

| **Percent Control** | | | | |
|---|---|---|---|---|
| % surfactant solution | **# days** | **A** | **B** | **C** |
| **7.5%** | **7** | 59 | 66 | 68 |
| | **14** | 55 | 64 | 71 |
| **15%** | **7** | 76 | 71 | 68 |
| | **14** | 76 | 79 | 74 |
| **30%** | **7** | 89 | 78 | 76 |
| | **14** | 89 | 78 | 80 |

Referring to Tables 1 and 2, the addition of the phosphate ester surfactants of the present invention to glyphosate herbicide compositions generally improves the herbicidal efficacy of glyphosate formulations. In addition, certain phosphate ester surfactant compositions are more effective at particular concentrations, and on particular types of weeds.

### Preparation of the Alkoxylated Phosphate Esters

### Example 5a

431.53 grams of a phosphate ester of SURFONIC® T15 were added to a pressure-sealed reactor, and heated to a temperature of about 70°C. Once the temperature reached 70°C, ethylene oxide was added to the reactor until all the acidity was quenched (*i.e.* the pH was approximately 7.0), and a pressure rise was observed. Then, the excess ethylene oxide was removed by purging the reactor with nitrogen.

### Example 5b

416.04 grams of a phosphate ester of SURFONIC® T20 were added to a pressure-sealed reactor, and heated to a temperature of about 38°C. Once the temperature reached 38°C, ethylene oxide was added to the reactor, and the temperature was increased to 54°C. Ethylene oxide was added to the reactor until all the acidity was quenched (*i.e*. the pH was approximately 7.0), and a pressure rise was observed. Then, the excess ethylene oxide was removed by purging the reactor with nitrogen.

### Example 5c

461.16 grams of a phosphate ester of SURFONIC® T5 were added to a pressure-sealed reactor, and heated to a temperature of about 73°C. Once the temperature reached 73°C, ethylene oxide was added to the reactor until all the acidity was quenched (*i.e.* the pH was approximately 7.0), and a pressure rise was observed. Then, the excess ethylene oxide was removed by purging the reactor with nitrogen.

### Preparation of Alkoxylated Phosphate Ester Surfactant Solutions

### Example 6

The alkoxylated phosphate esters produced in Examples 5a - 5c were blended as follows (all amounts are in grams):

| Surfactant Solution | | |
|---|---|---|
| **Component** | **A** | **B** |
| alkoxylated phosphate ester from Example 5a | 144 | 0 |
| alkoxylated phosphate ester from Example 5b | 0 | 136 |
| alkoxylated phosphate ester from Example 5c | 16 | 24 |
| deionized water | 40 | 40 |

### Preparation of Glyphosate Solutions Containing the Alkoxylated Phosphate Esters of the Present Invention

### Example 7

For each surfactant solution prepared in Example 6, a glyphosate solution was prepared that contained about 7.5, 15, and 30% vol. of the blended surfactant solution. Rodeo® was used as the source of glyphosate. (Rodeo® contains 648 g/L of the mono-isopropylamine salt of glyphosate.)

### Bioefficacy Testing of Glyphosate Solutions Containing the Alkoxylated Phosphate Esters of the Present Invention

### Example 8

An outside laboratory tested the bioefficacy of the glyphosate solutions prepared in Example 7 on morning glory and velvet leaf weeds. For comparison, the laboratory also tested the bioefficacy of a glyphosate solution that did not contain a surfactant, namely Rodeo®.

The bioefficacy testing was conducted in a greenhouse, using one foot by one foot plots, and a randomized complete block study design. The subject weeds were sprayed with each of the glyphosate solutions prepared in Example 7, under the following conditions:

| | |
|---|---|
| Application Pressure | 40 psi |
| Nozzle Type | flat-fan |
| Nozzle Size | 8002E |
| Boom Height, Unit | 18 inches |
| Ground Speed, Unit | 4 mph |
| Carrier | water |
| Spray Volume | 10 gpa |
| Propellant | air |
| Rate/Unit | 18 fluid ounce/acre |

Twenty-one days after treatment, the green mass of each treated plant was weighed, and compared to the weight of the green mass of an untreated sample. From this comparison, the percent control or percent of plant injury was extrapolated. For each glyphosate solution, three plots of weeds were tested, and the results are expressed in terms of a mean for the three plots.

The results of the bioefficacy testing completed on velvet leaf and morning glory weeds, twenty-one days after treatment, are summarized in Table 3. The results are expressed in terms of percent control, where 0% represents no plant injury, and 100% represents complete plant injury.

**Table 3**

| | **% control velvet leaf** | **% control morning glory** |
|---|---|---|
| **Glyphosate solution without a surfactant (Rodeo®)** | 51 | 50 |
| | | |
| **Glyphosate solution containing 7.5% of surfactant solution A** | 82 | 91 |
| | | |
| **Glyphosate solution containing 15% of surfactant solution A** | 92 | 98 |
| | | |
| **Glyphosate solution containing 30% of surfactant solution A** | 82 | 96 |
| | | |
| **Glyphosate solution containing 7.5% of surfactant solution B** | 68 | 93 |
| | | |
| **Glyphosate solution containing 15% of surfactant solution B** | 83 | 96 |
| | | |
| **Glyphosate solution containing 30% of surfactant solution B** | 83 | 96 |

Referring to Table 3, the addition of the alkoxylated phosphate ester surfactants of the present invention to glyphosate herbicide compositions improves the herbicidal efficacy of glyphosate formulations. Noticeably, particular alkoxylated phosphate ester surfactant compositions are more effective at particular concentrations, and on particular types of weeds.

Although illustrative embodiments have been shown and described, a wide range of modification, changes, and substitution is contemplated in the foregoing disclosure. In some instances, some features of the disclosed embodiments may be employed without a corresponding use of the other features. Accordingly, it is appropriate that the appended claims be construed broadly and in a manner consistent with the scope of the invention.

## Claims

1. A herbicide composition that comprises:
a. a herbicidally effective amount of a herbicidal active ingredient, wherein the herbicidal active ingredient comprises glyphosate or a salt thereof; and
b. a sufficient amount of a surfactant component that enhances the effectiveness of the herbicidal active ingredient, wherein the surfactant component comprises: (i) phosphate monoesters of tallow amine ethoxylates, alone or in combination with phosphate diesters of tallow amine ethoxylates, or (ii) alkoxylated phosphate monoesters of tallow amine ethoxylates, alone or in combination with alkoxylated phosphate diesters of tallow amine ethoxylates, where the monoesters (I) and the diesters (II) have the general formula: 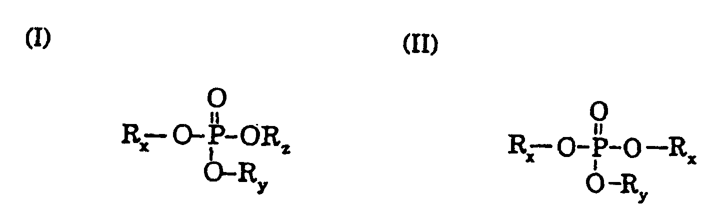 where R_{y} and R_{z} are each independently hydrogen or R₆-OH, where R₆ is a linear or branched chain alkenyl with from about two to about six carbon atoms; and Rₓ has the general formula: 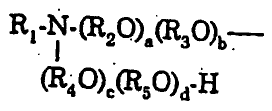 where R₁ is a straight or branched chain alkyl or alkenyl group with from about six to about twenty carbon atoms; R₂, R₃, R₄, and R₅ are each independently straight or branched chain alkenyl groups with from about two to about six carbon atoms; a, b, c, and d each independently vary from zero to about twenty; and, a+b+c+d varies from about five to about eighty.

2. The composition of claim 1, wherein R₁ is a straight or branched chain alkyl or alkenyl group with from about sixteen to about eighteen carbon atoms.

3. The composition of claims 1 or 2, wherein R₂, R₃, R₄ and R₅ are each independently alkenyl groups with from about two to about three carbon atoms.

4. The composition of any of claims 1 to 3, wherein a+b varies from about fifteen to about twenty, and c+d varies from about fifteen to about twenty.

5. The composition of any of claims 1 to 4, wherein the surfactant component further comprises a formulation aid.

6. The composition of claim 5, wherein the formulation aid is selected from the group consisting of alkoxylated amine surfactants, low molecular weight glycols, water, or mixtures thereof.

7. The composition of claim 6, wherein the alkoxylated amine surfactant comprises a lower tallow amine ethoxylate.

8. The composition of claim 6 or 7, wherein the low molecular weight glycol comprises diethylene glycol.

9. The composition of claim 6, wherein from about 26% to about 59% by mass of the surfactant component comprises phosphate monoesters of tallow amine ethoxylates, alone, or in combination with phosphate diesters of tallow amine ethoxylates.

10. The composition of claim 9, wherein from about 21 % to about 54% by mass of the surfactant component comprises the alkoxylated amine surfactant.

11. The composition of claim 10, wherein from about 5% to about 10% by mass of the surfactant component comprises the low molecular weight glycol.

12. The composition of claim 11, wherein from about 10% to about 15% by mass of the surfactant component comprises water.

13. The composition of claim 6, wherein less than about 90% by mass of the surfactant component comprises alkoxylated phosphate monoesters of tallow amine ethoxylates, alone, or in combination with alkoxylated phosphate diesters of tallow amine ethoxylates.

14. The composition of claim 13, wherein at least about 10% by mass of the surfactant component comprises water.

15. The composition of claim 12 or 14, wherein less than about 30% of the volume of the herbicide composition comprises the surfactant component.

16. The composition of claim 12 or 14, wherein the herbicide composition has a reduced tendency to cause eye and skin irritation.

17. A surfactant for increasing the bioefficacy of a herbicide, wherein the surfactant comprises (i) phosphate monoesters of tallow amine ethoxylates, alone or in combination with phosphate diesters of tallow amine ethoxylates, or (ii) alkoxylated phosphate monoesters of tallow amine ethoxylates, alone or in combination with alkoxylated phosphate diesters of tallow amines ethoxylates, where the monoesters (I) and the diesters (II) have the general formula: 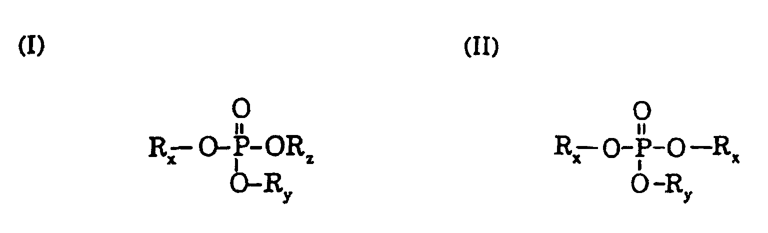 where R_{y} and R_{z} are each independently hydrogen or R₆-OH, where R₆ is a linear or branched chain alkenyl with from about two to about six carbon atoms; and Rₓ has the general formula: 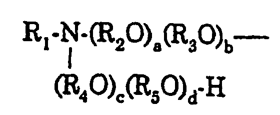 where R₁ is a straight or branched chain alkyl or alkenyl group with from about six to about twenty carbon atoms; R₂, R₃, R₄, and R₅ are each independently straight or branched chain alkenyl groups with from about two to about six carbon atoms; a, b, c, and d each independently vary from zero to about twenty; and, a+b+c+d varies from about five to about eighty.

18. The surfactant of claim 17, wherein R₁ is a straight or branched chain alkyl or alkenyl group with from about sixteen to about eighteen carbon atoms.

19. The surfactant of claim 17 or 18, wherein R₂, R₃, R₄, and R₅ are each independently alkenyl groups with from about two to about three carbon atoms.

20. The surfactant of any of claims 17 to 19, wherein a+b varies from about fifteen to about twenty, and c+d varies from about fifteen to about twenty.

21. Surfactant composition for increasing the bioefficacy of a herbicide that comprises:
a. a surfactant according to any of the claims 17 to 20; and
b. a formulation aid.

22. The composition of claim 21, wherein the formulation aid is selected from the group consisting of alkoxylated amine surfactants, low molecular weight glycols, water, or mixtures thereof.

23. The composition of claim 22, wherein the alkoxylated amine surfactant comprises a lower tallow amine ethoxylate.

24. The composition of claim 22 or 23, wherein the low molecular weight glycol comprises diethylene glycol.

25. The composition of claim 22, wherein from about 26% to about 59% by mass of the composition comprises phosphate monoesters of tallow amine ethoxylates, alone, or in combination with phosphate diesters of tallow amine ethoxylates.

26. The composition of claim 25, wherein from about 21% to about 54% by mass of the composition comprises the alkoxylated amine surfactant.

27. The composition of claim 26, wherein from about 5% to about 10% by mass of the composition comprises the low molecular weight glycol.

28. The composition of claim 27, wherein from about 10% to about 15% by mass of the composition comprises water.

29. The composition of claim 22, wherein less than about 90% by mass of the composition comprises alkoxylated phosphate monoesters of tallow amine ethoxylates, alone, or in combination with alkoxylated phosphate diesters of tallow amine ethoxylates.

30. The composition of claim 29, wherein at least about 10% by mass of the composition comprises water.

31. A method of killing or controlling weeds or unwanted vegetation comprising the step of applying a herbicidally effective amount of the composition according to any of claims 1 to 16 to the foliage or tissue of the weeds or unwanted vegetation.

## Patentansprüche

1. Herbizidzusammensetzung, welche umfaßt:
a. eine herbizid wirksame Menge eines herbiziden Wirkstoffes, wobei der herbizide Wirkstoff Glyphosat oder ein Salz davon umfaßt; und
b. eine ausreichende Menge einer oberflächenaktiven Komponente, die die Wirksamkeit des herbiziden Wirkstoffes verstärkt, wobei die oberflächenaktive Komponente umfaßt: (i) Phosphatmonoester von Talg-Aminethoxylaten, allein oder in Kombination mit Phosphatdiestern von Talg-Aminethoxylaten, oder (ii) alkoxylierte Phosphatmonoester von Talg-Aminethoxylaten, allein oder in Kombination mit alkoxylierten Phosphatdiestern von Talg-Aminethoxylatcn, wobei die Monoester (I) und die Diester (II) die allgemeine Formel haben: 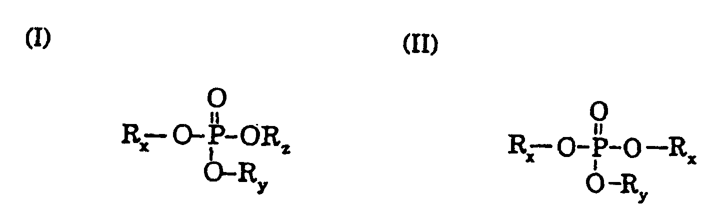 in denen R_{y} und R_{z} jeweils unabhängig Wasserstoff oder R₆-OH sind, wobei R₆ ein lineares oder verzweigtkettiges Alkenyl mit von etwa zwei bis etwa sechs Kohlenstoffatomen ist; und Rₓ die allgemeine Formel hat: 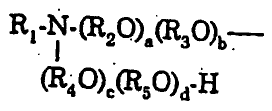 in der R₁ eine gerad- oder verzweigtkettige Alkyl- oder Alkenylgruppe mit von etwa sechs bis etwa zwanzig Kohlenstoffatomen ist; R₂, R₃, R₄ und R₅ jeweils unabhängig gerad- oder verzweigtkettige Alkenylgruppen mit von etwa zwei bis etwa sechs Kohlenstoffatomen sind; a, b, c und d jeweils unabhängig von Null bis etwa Zwanzig variieren; und a+b+c+d von etwa Fünf bis etwa Achtzig variiert.

2. Zusammensetzung nach Anspruch 1, **dadurch gekennzeichnet, daß** R₁ eine gerad- oder verzweigtkettige Alkyl- oder Alkenylgruppe mit von etwa sechzehn bis etwa achtzehn Kohlenstoffatomen ist.

3. Zusammensetzung nach Anspruch 1 oder 2, **dadurch gekennzeichnet, daß** R₂, R₃, R₄ und R₅ jeweils unabhängig Alkenylgruppen mit von etwa zwei bis etwa drei Kohlenstoffatomen sind.

4. Zusammensetzung nach einem der Ansprüche 1 bis 3, **dadurch gekennzeichnet, daß** a+b von etwa Fünfzehn bis etwa Zwanzig variiert und c+d von etwa Fünfzehn bis etwa Zwanzig variiert.

5. Zusammensetzung nach einem der Ansprüche 1 bis 4, **dadurch gekennzeichnet, daß** die oberflächenaktive Komponente weiter einen Formulierungshilfsstoff umfaßt.

6. Zusammensetzung nach Anspruch 5, **dadurch gekennzeichnet, daß** der Formulierungshilfsstoff ausgewählt ist aus der Gruppe, die aus alkoxylierten Amin-Tensiden, niedermolekularen Glykolen, Wasser oder Mischungen derselben besteht.

7. Zusammensetzung nach Anspruch 6, **dadurch gekennzeichnet, daß** das alkoxylierte Amin-Tensid ein niederes Talg-Aminethoxylat umfaßt.

8. Zusammensetzung nach Anspruch 6 oder 7, **dadurch gekennzeichnet, daß** das niedermolekulare Glykol Diethylenglykol umfaßt.

9. Zusammensetzung nach Anspruch 6, **dadurch gekennzeichnet, daß** von etwa 26 bis etwa 59 Massen-% der oberflächenaktiven Komponente Phosphatmonoester von Talg-Aminethoxylaten umfassen, allein oder in Kombination mit Phosphatdiestern von Talg-Aminethoxylaten.

10. Zusammensetzung nach Anspruch 9, **dadurch gekennzeichnet, daß** von etwa 21 bis etwa 54 Massen-% der oberflächenaktiven Komponente das alkoxylierte Amin-Tensid umfassen.

11. Zusammensetzung nach Anspruch 10, **dadurch gekennzeichnet, daß** von etwa 5 bis etwa 10 Massen-% der oberflächenaktiven Komponente das niedermolekulare Glykol umfassen.

12. Zusammensetzung nach Anspruch 1, **dadurch gekennzeichnet, daß** von etwa 10 bis etwa 15 Massen-% der oberflächenaktiven Komponente Wasser umfassen.

13. Zusammensetzung nach Anspruch 6, **dadurch gekennzeichnet, daß** weniger als etwa 90 Massen-% der oberflächenaktiven Komponente alkoxylierte Phosphatmonoester von Talg-Aminethoxylaten umfassen, allein oder in Kombination mit alkoxylierten Phosphatdiestern von Talg-Aminethoxylaten.

14. Zusammensetzung nach Anspruch 13, **dadurch gekennzeichnet, daß** wenigstens etwa 10 Massen-% der oberflächenaktiven Komponente Wasser umfassen.

15. Zusammensetzung nach Anspruch 12 oder 14, **dadurch gekennzeichnet, daß** weniger als etwa 30% des Volumens der Herbizidzusammensetzung die oberflächenaktive Komponente umfassen.

16. Zusammensetzung nach Anspruch 12 oder 14, **dadurch gekennzeichnet, daß** die Herbizidzusammensetzung eine verringerte Neigung besitzt, Augen- und Hautirritationen zu verursachen.

17. Oberflächenaktive Verbindung zur Erhöhung der biologischen Wirksamkeit eines Herbizids, **dadurch gekennzeichnet, daß** die oberflächenaktive Verbindung (i) Phosphatmonoester von Talg-Aminethoxylaten, allein oder in Kombination mit Phosphatdiestern von Talg-Aminethoxylaten, oder (ii) alkoxylierte Phosphatmonoester von Talg-Aminethoxylaten, allein oder in Kombination mit alkoxylierten Phosphatdiestern von Talg-Aminethoxylaten, umfaßt, wobei die Monoester (i) und die Diester (ii) die allgemeine Formel haben: 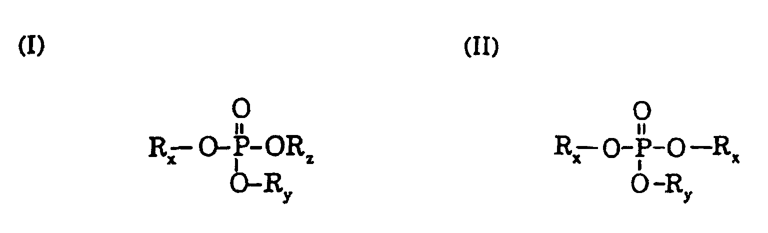 in denen R_{y} und R_{z} jeweils unabhängig Wasserstoff oder R₆-OH sind, wobei R₆ ein lineares oder verzweigtkettiges Alkenyl mit von etwa zwei bis etwa sechs Kohlenstoffatomen ist; und Rₓ die allgemeine Formel hat: 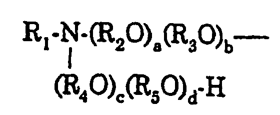 in der R₁ eine gerad- oder verzweigtkettige Alkyl- oder Alkenylgruppe mit von etwa sechs bis etwa zwanzig Kohlenstoffatomen ist; R₂, R₃, R₄ und R₅ jeweils unabhängig gerad- oder verzweigtkettige Alkenylgruppen mit von etwa zwei bis etwa sechs Kohlenstoffatomen sind; a, b, c und d jeweils unabhängig von Null bis etwa Zwanzig variieren; und a+b+c+d von etwa Fünf bis etwa Achtzig variiert.

18. Oberflächenaktive Verbindung nach Anspruch 17, **dadurch gekennzeichnet, daß** R₁ ein gerad- oder verzweigtkettige Alkyl- oder Alkenylgruppe mit von etwa sechzehn bis etwa achtzehn Kohlenstoffatomen ist.

19. Oberflächenaktive Verbindung nach Anspruch 17 und 18, **dadurch gekennzeichnet, daß** R₂, R₃, R₄ und R₅ jeweils unabhängig Alkenylgruppen mit von etwa zwei bis etwa drei Kohlenstoffatome sind.

20. Oberflächenaktive Verbindung nach einem der Ansprüche 17 bis 19, **dadurch gekennzeichnet, daß** a+b von etwa Fünfzehn bis etwa Zwanzig variiert und c+d von etwa Fünfzehn bis etwa Zwanzig variiert.

21. Oberflächenaktive Zusammensetzung zur Erhöhung der biologischen Wirksamkeit eines Herbizids, welche umfaßt:
a. eine oberflächenaktive Verbindung nach einem der Ansprüche 17 bis 20; und
b. einen Formulierungshilfsstoff.

22. Zusammensetzung nach Anspruch 21, **dadurch gekennzeichnet, daß** der Formulierungshilfsstoff ausgewählt ist aus der Gruppe, die aus alkoxylierten Amin-Tensiden, niedermolekularen Glykolen, Wasser oder Mischungen derselben besteht.

23. Zusammensetzung nach Anspruch 22, **dadurch gekennzeichnet, daß** das alkoxylierte Amin-Tensid ein niederes Talg-Aminethoxylat umfaßt.

24. Zusammensetzung nach Anspruch 22 oder 23, **dadurch gekennzeichnet, daß** das niedermolekulare Glykol Diethylenglykol umfaßt.

25. Zusammensetzung nach Anspruch 22, **dadurch gekennzeichnet, daß** von etwa 26 bis etwa 59 Massen-% der Zusammensetzung Phosphatmonoester von Talg-Aminethoxylaten umfassen, allein oder in Kombination mit Phosphatdiestern von Talg-Aminethoxylaten.

26. Zusammensetzung nach Anspruch 25, **dadurch gekennzeichnet, daß** von etwa 21 bis etwa 54 Massen-% der Zusammensetzung das alkoxylierte Amin-Tensid umfassen.

27. Zusammensetzung nach Anspruch 26, **dadurch gekennzeichnet, daß** von etwa 5 bis etwa 10 Massen-% der Zusammensetzung das niedermolekulare Glykol umfassen.

28. Zusammensetzung nach Anspruch 27, **dadurch gekennzeichnet, daß** von etwa 10 bis etwa 15 Massen-% der Zusammensetzung Wasser umfassen.

29. Zusammensetzung nach Anspruch 22, **dadurch gekennzeichnet, daß** weniger als der Zusammensetzung alkoxylierte Phosphatmonoester von Talg-Aminethoxylaten umfassen, allein oder in Kombination mit alkoxylierten Phosphatdiestern von Talg-Aminethoxylaten.

30. Zusammensetzung nach Anspruch 29, **dadurch gekennzeichnet, daß** wenigstens etwa 10 Massen-% der Zusammensetzung Wasser umfassen.

31. Verfahren zum Abtöten oder Kontrollieren von Unkräutern oder unerwünschter Vegetation, welches den Schritt des Aufbringens einer herbizid wirksamen Menge der Zusammensetzung nach einem der Ansprüche 1 bis 16 auf das Blattwerk oder Gewebe der Unkräuter oder unerwünschten Vegetation umfaßt.

## Revendications

1. Composition herbicide qui comprend :
a. une quantité efficace du point de vue herbicide d'un ingrédient actif herbicide, dans laquelle l'ingrédient actif herbicide comprend le glyphosate ou un sel de celui-ci ; et
b. une quantité suffisante d'un composant tensioactif qui accroît l'efficacité de l'ingrédient actif herbicide, dans laquelle le composant tensioactif comprend : (i) des monoesters de phosphate d'éthoxylats d'amine de suif, seuls ou en combinaison avec des diesters de phosphate d'éthoxylats d'amine de suif, ou (ii) des monoesters de phosphate alcoxylé d'éthoxylats d'amine de suif, seuls ou en combinaison avec des diesters de phosphate alcoxylé d'éthoxylats d'amine de suif, où les monoesters (I) et les diesters (II) répondent aux formules générales : 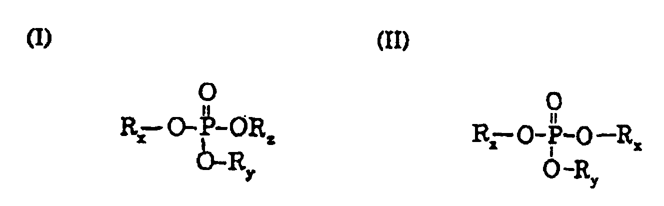
où R_{y} et R_{z} sont chacun indépendamment un atome d'hydrogène ou R₆-OH, où R₆ est un groupe alcényle à chaîne linéaire ou ramifiée avec d'environ deux à environ six atomes de carbone ; et Rₓ répond à la structure générale : 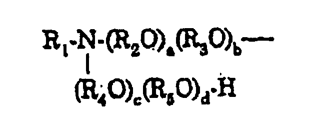 où R₁ est un groupe alkyle ou alcényle à chaîne droite ou ramifiée avec d'environ six à environ vingt atomes de carbone ; R₂, R₃, R₄ et R₅ sont chacun indépendamment des groupes alcényle à chaîne droite ou ramifiée avec d'environ deux à environ six atomes de carbone ; a, b, c et d varient chacun indépendamment de zéro à environ vingt ; et a+b+c+d varie d'environ cinq à environ quatre-vingt.

2. Composition selon la revendication 1, dans laquelle R₁ est un groupe alkyle ou alcényle à chaîne droite ou ramifiée avec d'environ seize à environ dix-huit atomes de carbone.

3. Composition selon la revendication 1 ou 2, dans. laquelle R₂, R₃, R₄ et R₅ sont chacun indépendamment des groupes alcényle avec d'environ deux à environ trois atomes de carbone.

4. Composition selon l'une quelconque des revendications 1 à 3, dans laquelle a+b varie d'environ quinze à environ vingt et c+d varie d'environ quinze à environ vingt.

5. Composition selon l'une quelconque des revendications 1 à 4, dans laquelle le composant tensioactif comprend en outre une aide à la formulation.

6. Composition selon la revendication 5, dans laquelle l'aide à la formulation est choisie dans le groupe constitué par les agents tensioactifs amines alcoxylées, les glycols de faible masse moléculaire, l'eau ou les mélanges de ceux-ci.

7. Composition selon la revendication 6, dans laquelle l'agent tensioactif amine alcoxylé comprend ou un éthoxylat d'amine de suif inférieur.

8. Composition selon la revendication 6 ou 8, dans laquelle le glycol de faible masse moléculaire comprend le diéthylène glycol.

9. Composition selon la revendication 6, dans laquelle d'environ 26 % à environ 59 % en masse du composant tensioactif comprend des monoesters de phosphate d'éthoxylats d'amine de suif, seul ou en combinaison avec des diester de phosphate d'éthoxylats d'amine de suif.

10. Composition selon la revendication 9, dans laquelle d'environ 21 % à environ 54 % en masse du composant tensioactif comprend l'agent tensioactif amine alcoxylée.

11. Composition selon la revendication 10, dans laquelle d'environ 5 % à environ 10 % en masse du composant tensioactif comprend le glycol de faible masse moléculaire.

12. Composition selon la revendication 11, dans laquelle d'environ 10 % à environ 15 % en masse du composant tensioactif comprend de l'eau.

13. Composition selon la revendication 6, dans laquelle moins d'environ 90 % en masse du composant tensioactif comprend des monoesters de phosphate alcoxylé d'éthoxylats d'amine de suif, seuls ou en combinaison avec des diesters de phosphate alcoxylé d'éthoxylats d'amine de suif.

14. Composition selon la revendication 13, dans laquelle au moins environ 10 % en masse du composant tensioactif comprend de l'eau.

15. Composition selon la revendication 12 ou 14, dans laquelle moins d'environ 30 % du volume de la composition herbicide comprend le composant tensioactif.

16. Composition selon la revendication 12 ou 14, dans laquelle la composition herbicide a une tendance réduite à entraîner une irritation des yeux et de la peau.

17. Agent tensioactif destiné à accroître la bioefficacité d'un herbicide, dans lequel l'agent tensioactif comprend (i) des monoesters de phosphate d'éthoxylats d'amine de suif, seuls ou en combinaison avec des diesters de phosphate d'éthoxylats d'amine de suif, ou (ii) des monoesters de phosphate alcoxylé d'éthoxylats d'amine de suif, seuls ou en combinaison avec des diesters de phosphate alcoxylé d'éthoxylats d'amine de suif, où les monoesters (I) et les. diesters (II) répondent aux formules générales : 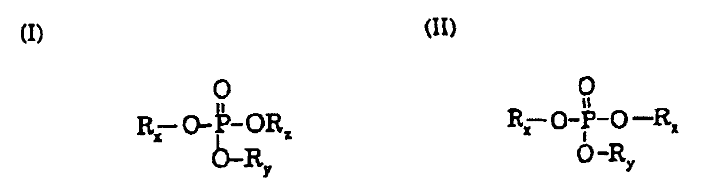 où R_{y} et R_{z} sont chacun un atome d'hydrogène ou R₆-OH, où R₆ est un groupe alcényle à chaîne linéaire ou ramifiée avec d'environ deux à environ six atomes de carbone ; et Rₓ répond à la formule générale : 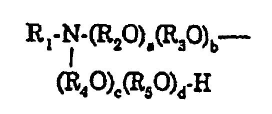 où R₁ est un groupe alkyle ou alcényle à chaîne droite ou ramifiée avec d'environ six à environ vingt atomes de carbone ; R₂, R₃, R₄ et R₅ sont chacun indépendamment des groupes alcényle à chaîne droite ou ramifiée avec d'environ deux à environ six atomes de carbone ; a, b, c et d varient chacun indépendamment de zéro à environ vingt ; et a+b+c+d varie d'environ cinq à environ quatre-vingt.

18. Agent tensioactif selon la revendication 17, dans lequel R₁ est un groupe alkyle ou alcényle à chaîne droite ou ramifiée avec d'environ seize à environ dix-huit atomes de carbone.

19. Agent tensioactif selon la revendication 17 ou 18, dans lequel R₂, R₃, R₄ et R₅ sont chacun indépendamment des groupes alcényle avec d'environ deux à environ trois atomes de carbone.

20. Agent tensioactif selon l'une quelconque des revendications 17 à 19, dans lequel a+b varie d'environ quinze à environ vingt et c+d varie d'environ quinze à environ vingt.

21. Composition tensioactive destinée à accroître la bioefficacité d'un herbicide qui comprend :
a. un agent tensioactif selon l'une quelconque des revendications 17 à 20 ; et
b. une aide à la formulation.

22. Composition selon la revendication 21, dans laquelle l'aide à la formulation est choisie dans le groupe constitué par les agents tensioactifs amines alcoxylées, les glycols de faible masse moléculaire, l'eau ou les mélanges de ceux-ci.

23. Composition selon la revendication 22, dans laquelle l'agent tensioactif amine alcoxylée comprend un éthoxylat d'amine de suif inférieur.

24. Composition selon la revendication 22 ou 23, dans laquelle le glycol de faible masse moléculaire comprend le diéthylène glycol.

25. Composition selon la revendication 22, dans laquelle d'environ 26 % à environ 59 % en masse de la composition comprend des monoesters de phosphate d'éthoxylats d'amine de suif, seuls ou en combinaison avec des diesters de phosphate d'éthoxylats d'amine de suif.

26. Composition selon la revendication 25, dans laquelle d'environ 21 % à environ 54 % en masse de la composition comprend l'agent tensioactif amine alcoxylée.

27. Composition selon la revendication 26, dans laquelle d'environ 5 % à environ 10 % en masse la composition comprend le glycol de faible masse moléculaire.

28. Composition selon la revendication 27, dans laquelle d'environ 10 % à environ 15 % en masse de la composition comprend de l'eau.

29. Composition selon la revendication 22, dans laquelle moins d'environ 90 % en masse de la composition comprend des monoesters de phosphate alcoxylé d'éthoxylats d'amine de suif, seuls ou en combinaison avec des diesters de phosphate alcoxylé d'éthoxylats d'amine de suif.

30. Composition selon la revendication 29, dans laquelle au moins environ 10 % en masse de la composition comprend de l'eau.

31. Procédé de suppression ou de régulation de mauvaises. herbes ou de végétation non voulue comprenant l'étape d'application d'une quantité efficace du point de vue herbicide de la composition selon l'une quelconque des revendications 1 à 16 au feuillage ou au tissu des mauvaises herbes ou de la végétation non voulue.
